# FASCICULE DE BREVET EUROPEEN

(11) **EP 4 006 340 B1**
(45) Date de publication et mention de la délivrance du brevet: **17.07.2024**
(21) Numéro de dépôt: 21210448.3
(22) Date de dépôt: 25.11.2021
(51) Int. Cl.: F04B 15/02, B01D 19/00, F04B 23/02, F04B 23/08, F04F 3/00, F04F 5/04, F04F 5/52, F04F 5/54

(54) **DISPOSITIF ET PROCÉDÉ DE POMPAGE DE PRODUITS A FAIBLE ÉVAPORATION SOUS VIDE**
VORRICHTUNG UND VERFAHREN ZUM PUMPEN VON PRODUKTEN MIT GERINGER VERDAMPFUNG UNTER VAKUUM
DEVICE AND METHOD FOR PUMPING PRODUCTS WITH LOW VACUUM EVAPORATION

(30) Priorité: 30.11.2020 FR 2012381
(43) Date de publication de la demande: 01.06.2022
(73) Titulaire: ORTEC EXPANSION, 13799 Aix En Provence Cedex 3 (FR)
(72) Inventeur: RIVARD, Daniel, 75007 Paris (FR)
(74) Mandataire: Gevers & Orès

(56) Documents cités:
- CN-Y- 2 761 896
- DE-C- 483 213
- FR-A- 1 559 570
- JP-B2- 4 227 692

## Description

### DOMAINE TECHNIQUE

La présente invention concerne un dispositif et un procédé de pompage de produits à faible évaporation sous vide, d'une zone de pompage vers une enceinte de stockage.

En particulier, l'invention concerne un dispositif et un procédé de pompage de produits tels que des hydrocarbures, des acides, des bases, des boues d'épuration, des boues biologiques, des boues primaires, et de manière générale de tout produit susceptible de générer une atmosphère explosive et/ou d'émettre lors des pompages, des composés organiques volatils dans l'atmosphère.

### ÉTAT DE LA TECHNIQUE

De nombreuses industries, par exemple chimiques, pétrochimiques, agroalimentaires, métallurgiques, ..., génèrent des boues susceptibles de produire des atmosphères explosives et/ou d'émettre des composés volatils polluants. Il est donc nécessaire de pomper régulièrement ces boues pour pouvoir les transporter vers des sites spécialisés de traitement et/ou de stockage.

De telles opérations de pompage sont également nécessaires notamment pour purger des égouts industriels, récupérer des déchets produits par un nettoyage à eau haute pression d'installations industrielles, extraire des boues de stations d'épuration, pour assécher des fonds de cuves de manière à permettre leur inspection ou leur maintenance, etc.

Ces opérations de pompage présentent de nombreux risques pour la sécurité et la santé des opérateurs et des riverains et pour la protection des installations et de l'environnement, qui sont liés à la nature explosive des produits pompés et à l'émission de gaz nocifs comme les composés organiques volatils. Par exemple, le pompage de 4 mètres cube d'essence sans plomb 98 peut provoquer un rejet de 114 litres de carburant sous forme gazeuse ce qui équivaut à 210 mètres cube de gaz toxique dans l'atmosphère.

Les composés organiques volatils étant plus lourds que l'air, ils risquent de former des poches gazeuses dangereuses à proximité des lieux de l'opération de pompage.

Par ailleurs, l'activité de nettoyage industriel impose également de purger et de dégazer en totalité les moyens de pompage du fait de la diversité des produits traités, dont l'association pourrait générer une réaction chimique dangereuse.

Pour réaliser de telles opérations de pompage de déchets liquides ou pâteux, il est courant d'utiliser une pompe à vide pour vider une cuve contenant les produits à pomper vers une citerne mise sous vide. Cette technique permet à la fois de pomper des nappes de produits (absence de crépine) et évite le passage de produits dangereux dans le corps d'une machine tournante. En revanche, elle peut favoriser l'évaporation de déchets volatiles par abaissement du point d'ébullition, le transfert des produits à pomper étant réalisé soit par une dépression exercée sur les produits soit par mode aéraulique où la vitesse d'air admise induit le mouvement. Pour ce faire, un tuyau d'aspiration est immergé en permanence dans le produit à pomper. Cette technique présente l'avantage de permettre un arrêt de fonctionnement de la pompe à vide durant l'opération de pompage en maintenant une capacité d'aspiration tant que le différentiel par rapport à la pression atmosphérique existe. Cette technique permet donc de vider complètement la cuve à vidanger. De plus, elle permet d'installer la pompe à des grandes distances du produit, d'éviter le contact du produit avec la pompe à l'exception des vapeurs et des gaz et de limiter la quantité de polluants rejetés.

Toutefois, ce type de technique a deux inconvénients majeurs. D'une part, les pompages en nettoyage industriel se réalisent, le plus souvent, sur des fonds de bacs qui ne permettent que très rarement de pouvoir immerger totalement le tuyau d'aspiration. Cette conséquence, provoque des entrées d'air à l'aspiration qui, si celles-ci n'étaient pas compensées dans le cas de pompes volumétriques, stopperaient le pompage. D'autre part, il favorise l'ébullition des produits pompés sous vide à basse température avec pour conséquence, le rejet de gaz et de produits volatils dans l'atmosphère, augmentant de fait, les risques environnementaux et d'explosion.

Par ailleurs, au cours du pompage de 4 mètres cube d'essence super 98 par des procédés de pompage connus, les premiers litres d'essence qui entrent dans la cuve sous vide de grande capacité subissent le vide tout le temps du pompage avec pour conséquence une accélération de l'évaporation de l'essence pompée.

Parmi les dispositifs de pompage connus, certains utilisent des séparateurs bi-phasiques pour favoriser le dégazage des produits pompés dans la cuve de façon à réduire l'émission de composés organiques volatiles. Cependant, l'arrangement interne de ce type de dispositif dans une enceinte de stockage ne permet pas de la remplir ce qui engendre une perte de volume d'environ 10% à 15%.

On connaît un dispositif pour le pompage d'un produit par aspiration sous vide, destiné à pallier au moins en partie ce problème. Ce dispositif de pompage comporte une source de vide, une buse d'aspiration du produit, une source de pression, deux cuves de transit pour produit, et un jeu de vannes commandées, reliant simultanément et en alternance, l'une des cuves de transit à la source de vide et à la buse d'aspiration et l'autre des cuves de transit à la source de pression et à une cuve de réception du produit.

L'aspiration sous vide et la mise en pression des cuves de transit sont réalisées, de préférence, par une seule et même pompe à vide. La source de vide et la source de pression étant respectivement constituées par l'orifice d'aspiration et par l'orifice de refoulement de la pompe à vide. Ainsi, les deux cuves de transit travaillent en alternance, ce qui permet de limiter le temps d'exposition au vide des produits pompés, de sorte à limiter le phénomène physique de désorption des gaz des produits.

Cette solution n'est pas complètement satisfaisante. En particulier, l'utilisation d'une seule pompe à vide pour aspirer et refouler peut limiter la capacité d'aspiration et augmenter le temps de mise sous vide des liquides dans les cuves de transit avec pour conséquence une augmentation possible des rejets de produits volatils.

Par ailleurs, on connaît :
- par le document CN 2 761 896, un système d'aspiration à jet de vapeur, selon le préambule de la revendication 1, qui comprend une pompe d'éjection de vapeur à plusieurs étages et de condenseurs composés d'un condenseur principal et de condenseurs secondaires, un réservoir de stockage d'eau étant agencé sous chaque condenseur, les réservoirs de stockage d'eau étant reliés ensemble par l'intermédiaire d'un tube siphon ;
- par le document JP 4 227692 B2, un dispositif de pompage de produits d'une zone de pompage vers une enceinte de stockage ; et
- par le document DE 483 213 C, un système d'auto-aération d'une eau d'alimentation, sous vide et sans échauffement.

### EXPOSÉ DE L'INVENTION

La présente invention a pour objet de remédier au moins à cet inconvénient.

Elle concerne un dispositif de pompage de produits d'une zone de pompage vers une enceinte de stockage, ledit dispositif de pompage comportant :
- deux cuves de transit configurées pour recevoir les produits à pomper se séparant en produits non gazeux et en produits gazeux, chacune desdites cuves de transit étant munie d'un entrée de produits, d'une sortie de vidange de produits non gazeux et d'un orifice d'aspiration ;
- un système de transfert configuré pour générer une aspiration des produits de la zone de pompage vers lesdites cuves de transit et pour générer un transfert des produits non gazeux desdites cuves de transit vers l'enceinte de stockage ;
- une pluralité de vannes aptes à être commandées et configurées pour, en alternance, soit permettre, soit bloquer une communication d'une desdites cuves de transit avec le système de pompage et la zone de pompage et une communication de l'autre desdites cuves de transit avec le système de pompage vers l'enceinte de stockage ; et
- un système de commande de ladite pluralité de vannes.

Selon l'invention, ledit système de transfert comporte :
- une unité d'aspiration munie d'au moins deux hydro-éjecteurs reliés à l'orifice d'aspiration de chacune desdites cuves de transit et configurée pour au moins générer l'aspiration et la séparation des produits à pomper en produits gazeux et non gazeux, l'aspiration des produits de la zone de pompage étant engendrée par une mise sous vide des cuves de transit en limitant le temps d'exposition au vide ; et
- une unité de transfert distincte de l'unité d'aspiration, qui est munie d'une pompe volumétrique de transfert reliée à la sortie de vidange de chacune desdites cuves de transit et qui est configurée pour au moins générer le transfert des produits non gazeux vers l'enceinte de stockage.

Ainsi, grâce à l'invention, le temps de pompage des produits, au cours duquel ont lieu les phénomènes de désorption des gaz, se trouve minimisé en raison du faible volume des produits pompés sous vide. En effet, il n'y a pas de cumul de temps que les produits pompés passent sous vide.

En particulier, lorsque les produits à pomper sont de faibles volumes, l'aspiration des produits à pomper peut être interrompue. L'unité d'aspiration permet de réamorcer le pompage rapidement et, simultanément, l'unité de transfert permet de refouler les produits dégazés, dans l'enceinte de stockage.

Par ailleurs, le transfert des produits non gazeux est obtenu par une pompe volumétrique ce qui limite le temps d'exposition des produits au vide et donc la désorption des gaz dans l'enceinte de stockage et permet le remplissage par le bas de l'enceinte de stockage sans séparateur bi-phasique.

Avantageusement, le diamètre de chacune desdites cuves de transit est compris entre 70 centimètres et 80 centimètres.

Par ailleurs, avantageusement, le rapport entre le volume et la surface supérieure des cuves de transit en contact avec les produits est compris 1/30 et 1/25.

Ainsi, en considérant des cuves de transit de dimensions réduites, on réduit la surface au vide ce qui limite la formation de gaz issus de phénomènes de désorption thermique.

Par ailleurs, de façon avantageuse, l'unité d'aspiration est munie d'une pompe haute pression alimentant lesdits au moins deux hydro-éjecteurs en eau à haute pression, chacun desdits au moins deux hydro-éjecteurs refoulant l'eau dans au moins une cuve d'eau qui alimente ladite pompe haute pression.

Ainsi, l'unité d'aspiration fonctionne sur un principe de recyclage de l'eau.

Avantageusement, l'un desdits au moins deux hydro-éjecteurs est configuré pour compenser des variations d'aspiration au cours du temps.

En outre, de manière avantageuse, le dispositif de pompage comporte un réseau de rejet des gaz produits au cours du pompage vers une zone de rejet, le réseau de rejet comprenant :
- au moins une conduite de rejet des gaz produits par lesdites cuves de transit et reliant l'orifice d'aspiration de chacune desdites cuves de transit auxdits au moins deux hydro-éjecteurs, ladite au moins une conduite contribuant également à la mise sous vide par aspiration de chacune desdites cuves de transit ;
- au moins une conduite de transfert d'eau reliant lesdits au moins deux hydro-éjecteurs à au moins une cuve d'eau ; et
- une canalisation sortant de ladite au moins une cuve d'eau de manière à disperser les gaz produits par lesdites cuves de transit dans la zone de rejet.

De préférence, le réseau de rejet comporte également un premier conduit de rejet des gaz produits par désorption dans l'enceinte de stockage, reliant l'enceinte de stockage à ladite au moins une cuve d'eau.

Selon un mode de réalisation particulier, l'unité d'aspiration est configurée pour générer une mise sous vide de l'enceinte de stockage, pour aider au pompage direct de produits comprenant des éléments solides par une pipe arrière. Selon ce mode de réalisation particulier, le réseau de rejet comporte également un second conduit de rejet des gaz produits par désorption dans l'enceinte de stockage reliant ladite enceinte de stockage auxdits au moins deux hydro-éjecteurs, ledit second conduit contribuant également à la mise sous vide de l'enceinte de stockage.

Par ailleurs, selon un mode de réalisation particulier, le dispositif de pompage comporte un cyclo-filtre configuré pour filtrer les gaz issus de chacune desdites cuves de transit, ledit cyclo-filtre étant agencé entre lesdits au moins deux hydro-éjecteurs et chacune desdites cuves de transit.

En outre, le cyclo-filtre est également configuré pour filtrer les gaz issus de l'enceinte de stockage, ledit cyclo-filtre étant agencé entre lesdits au moins deux hydro-éjecteurs et ladite enceinte de stockage.

Selon un mode de réalisation particulier, l'unité de transfert est également configurée pour transférer lesdits produits non gazeux de l'enceinte de stockage vers une autre zone de stockage.

L'unité de transfert sert, ainsi, à la fois au remplissage et à la vidange de l'enceinte de stockage. L'unité de transfert peut également pomper des produits liquides ou pâteux, d'un bac et refouler les produits non gazeux vers une autre zone de stockage.

En outre, de manière avantageuse, le niveau de remplissage de chacune desdites cuves de transit est détecté par des capteurs radars.

La présente invention concerne également un procédé de pompage de produits d'une zone de pompage vers une enceinte de stockage selon la revendication 13.

Ainsi, grâce à l'invention, le temps de pompage des produits, c'est-à-dire le temps d'exposition au vide, au cours duquel ont lieu les phénomènes de désorption des gaz, se trouve minimisé. En particulier, lorsque les produits à pomper sont de faibles volumes, l'aspiration des produits à pomper peut être interrompue. L'unité d'aspiration permet de réamorcer le pompage rapidement et, simultanément, l'unité de transfert permet de refouler les produits dégazés, dans l'enceinte de stockage. Le transfert des produits non gazeux est réalisé par une pompe volumétrique (faisant partie d'une unité de transfert qui est distincte de l'unité d'aspiration).

Selon un mode de réalisation préféré, la durée maximale de mise sous vide des produits pompés dans les cuves de transit est inférieure ou égale à 12 secondes.

Avantageusement, ledit procédé de pompage comprend également une étape de rejet des gaz, mise en oeuvre simultanément à la mise en oeuvre des première et seconde étapes de commande de vannes, cette étape de rejet des gaz consistant à rejeter les gaz produits au cours de la séparation des produits dans chacune desdites cuves de transit vers une zone de rejet par l'intermédiaire d'un réseau de rejet.

Par ailleurs, selon un mode de réalisation particulier, ledit procédé de pompage comprend une étape de mise sous vide consistant à générer, à l'aide de l'unité d'aspiration, une mise sous vide directe dans l'enceinte de stockage, pour favoriser le pompage de produits comprenant des éléments solides dans l'enceinte de stockage.

En outre, ledit procédé de pompage comprend, de plus, une étape de transfert des produits non gazeux de l'enceinte de stockage vers une autre zone de stockage par l'unité de transfert.

La présente invention concerne, par ailleurs :
- une unité de pompage et de stockage de produits issus d'une zone de pompage, qui comprend un dispositif de pompage de produits, tel que celui décrit ci-dessus, ainsi qu'une enceinte de stockage ; et
- un hydrocureur qui est pourvu d'une telle unité de pompage et de stockage.

### BRÈVE DESCRIPTION DES FIGURES

Les figures annexées feront bien comprendre comment l'invention peut être réalisée. Sur ces figures, des références identiques désignent des éléments semblables.
La figure 1 est une vue schématique d'un mode de réalisation particulier d'un dispositif de pompage dans une première phase de fonctionnement.
La figure 2 est une vue schématique du dispositif de pompage de la figure 1 dans une seconde phase de fonctionnement.
La figure 3 est une vue latérale d'un hydrocureur, pourvu notamment d'un dispositif de pompage et d'une enceinte (ou cuve) de stockage.

### DESCRIPTION DÉTAILLÉE

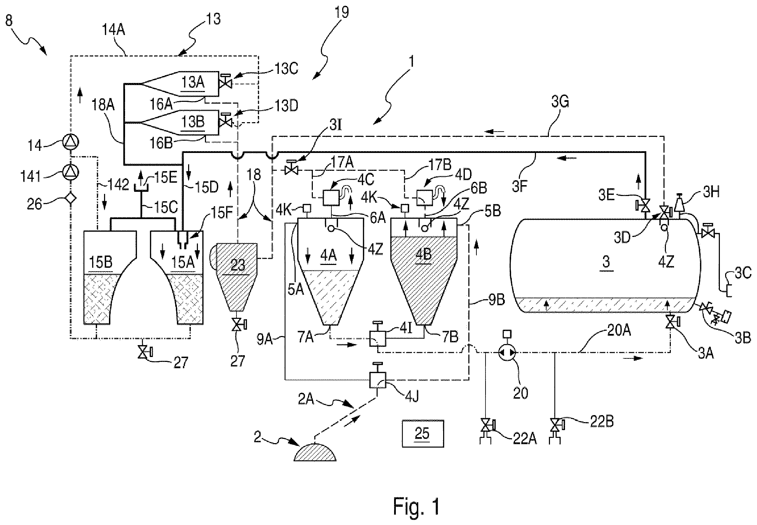

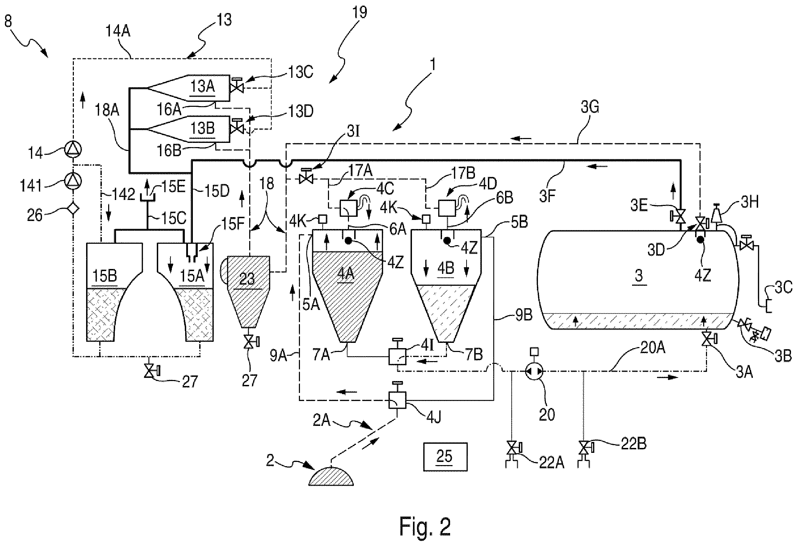

Le dispositif de pompage de produits (ci-après « dispositif de pompage 1 ») permettant d'illustrer l'invention et représenté de façon schématique sur les figures 1 et 2, est un dispositif destiné à pomper des produits tels que des boues, des solvants, des nappes de pétrole, ..., d'une zone de pompage 2 vers une enceinte de stockage 3.

Dans le cadre de la présente invention, on entend :
- par « zone de pompage», un endroit, par exemple un emplacement particulier notamment sur un site industriel ou bien une citerne ou un autre contenant, où se trouvent les produits qui doivent être pompés, par exemple pour être déplacés vers un site de traitement spécialisé ; et
- par « enceinte de stockage», un contenant tel qu'une cuve, un bac, une citerne, ..., destiné à recevoir les produits pompés. Ce contenant peut par exemple être monté sur un véhicule, comme précisé ci-dessous dans une application particulière, pour transporter les produits stockés vers un site de traitement.

Comme représenté sur les figures 1 et 2, le dispositif de pompage 1 comporte deux cuves de transit 4A et 4B. Ces cuves de transit 4A et 4B sont, de préférence, des cuves cycloniques ou hydrocyclones. Chacune de ces cuves de transit 4A et 4B est destinée à contenir des produits à pomper. Les cuves de transit 4A et 4B sont configurées pour permettre de diminuer le temps d'exposition au vide du produit pompé dans le but de minimiser le risque de transformation physique des produits pompés en gaz.

Chacune des cuves de transit 4A et 4B est munie d'une entrée de produits 5A, 5B pour recevoir les produits, d'une sortie de vidange 7A, 7B pour refouler les produits non gazeux issus de la séparation en différentes phases des produits pompés vers une enceinte de stockage 3 et d'un orifice d'aspiration 6A, 6B de mise sous vide ou de mise à l'air libre.

Selon un mode de réalisation préféré, chacune des cuves de transit 4A, 4B présente un diamètre compris entre 70 centimètres et 80 centimètres. Par ailleurs, chacune des cuves de transit 4A, 4B présente une capacité réduite, de préférence entre 100 à 150 litres. De plus, le rapport entre le volume et la surface des cuves de transit 4A et4B en contact avec les produits pompés est compris, de préférence, dans un rapport entre 1/30 et 1/25. Les phénomènes de désorption dans les cuves de transit 4A et 4B sont liés à leurs dimensions et à la surface de mise sous vide des produits pompés dans les cuves de transit 4A et 4B. Au moins ces deux paramètres permettent de réduire l'exposition au vide des produits pompés en temps et en surface et de séparer dans les cuves de transit 4A et 4B les produits gazeux générés par la mise sous vide en mode aéraulique des produits non gazeux. Cela engendre une baisse de la quantité de gaz polluants. À titre d'exemple, le pompage de 4 mètres cube d'essence sans plomb 98 par le dispositif de pompage 1 génère quatorze litres de carburant sous forme gazeuse, au lieu de 114 litres dans les dispositifs connus, ce qui signifie un abaissement d'émission de gaz toxique dans l'atmosphère de plus de huit fois.

Ainsi, le temps d'exposition au vide des produits pompés est abaissé, par exemple pour 4 mètre cube, de 240 secondes en cas de pompage direct par l'enceinte de stockage 3 à 12 secondes par les cuves de transit 4A et 4B, ce qui correspond à une réduction du temps de mise sous vide de vingt fois par rapport aux moyens de pompage conventionnels. De plus, dans le cas d'un pompage direct par l'enceinte de stockage 3, plus le volume des produits pompés augmente, plus grand est le temps d'exposition au vide des produits et donc la production de gaz par désorption. Au contraire, dans le cas du dispositif de pompage 1 avec des cuves de transit 4A et 4B, le temps d'exposition au vide des produits pompés ne dépend pas du volume de produits pompés et reste constant.

Dans un mode de réalisation particulier, on peut prévoir des capteurs radars 4K pour détecter le niveau de remplissage des cuves de 4A et 4B. Ces capteurs radars 4K sont plus efficaces que des moyens mécaniques. De plus, chacune des cuves de transit 4A, 4B peut être munie de boules flottantes 4Z permettant de bloquer toute fuite de produits par l'orifice d'aspiration 6A, 6B.

Le dispositif de pompage 1 comporte, en outre, un système de pompage 8, qui peut générer une aspiration des produits de la zone de pompage 2 vers les cuves de transit 4A et 4B et générer un refoulement des produits pompés non gazeux suite aux phénomènes de désorption thermique dans les cuves de transit 4A et 4B vers l'enceinte de stockage 3.

Selon l'invention, ce système de pompage 8 est formé d'une unité d'aspiration 13 et d'une unité de transfert 20. Comme représenté sur les figures 1 et 2, l'unité d'aspiration 13 et l'unité de transfert 20 sont deux unités distinctes.

L'unité d'aspiration 13 engendre une aspiration des produits de la zone de pompage 2 par une mise sous vide des cuves de transit 4A et 4B. Elle est reliée aux orifices d'aspiration 6A et 6B des cuves de transit 4A et 4B. Les produits aspirés de la zone de pompage 2 vers chacune des cuves de transit 4A, 4B circulent à travers des conduites 9A et 9B de transfert de produits qui relient la zone de pompage 2 (via par exemple une conduite commune) aux entrées de produits 5A et 5B des cuves de transit 4A et 4B.

Plus particulièrement, l'unité d'aspiration 13 (également appelée de mise sous vide) comporte au moins deux hydro-éjecteurs 13A et 13B. Les hydro-éjecteurs 13A et 13B sont reliés à une pompe haute pression 14, qui les alimente en eau à haute pression par une conduite 14A sur laquelle sont agencées des vannes 13C et 13D. La pompe haute pression 14 permet d'assurer un flux d'eau de pression suivant la demande, dans chacun des hydro-éjecteurs 13A, 13B, lorsque les vannes 13C et 13D sont ouvertes.

Contrairement à une pompe à vide dont le débit est fixé par sa vitesse de rotation, l'utilisation d'une pompe haute pression permet de moduler le débit d'eau haute pression qu'elle injecte dans les hydro-éjecteurs 13A et 13B. Une pompe à vide peut voir sa vitesse de rotation varier d'un facteur 1,5. Par exemple, sa vitesse de rotation peut varier entre 1000 mètre cube par heure à 1500 mètre cubes par heure ou entre 1500 mètres cube par heure et 3000 mètres cube par heure. Or, lorsque l'unité d'aspiration 13 a généré le vide dans les cuves de transit 4A et 4B en quelques minutes, il suffit simplement de compenser les prises d'air qui peuvent nécessiter, à titre d'exemple, 20% du débit. Une telle diminution est possible avec la pompe haute pression 14. Cela contribue à baisser les coûts de maintenance. La modulation du débit d'eau peut également être générée par une pompe de gavage 141 agencée en amont de la pompe haute pression 14. En outre, la pompe haute pression permet de générer une pression comprise entre 500 bar et 2000 bar.

Les hydro-éjecteurs 13A et 13B refoulent l'eau fournie par la pompe haute pression 14 dans une cuve 15A d'eau par l'intermédiaire des conduites 18A et 15D. Cette cuve 15A d'eau communique avec une autre cuve 15B d'eau de sorte que les deux cuves 15A et 15B d'eau servent de réservoirs d'eau pour la pompe haute pression 14. Chaque cuve 15A, 15B d'eau est pourvue d'une vanne 27 de vidange et de mise hors gel. Chaque cuve 15A, 15B d'eau comporte également un pot d'éclatement 15F. La présence de deux cuves 15A et 15B d'eau, agencées de part et d'autre de l'enceinte de stockage 2, résulte du besoin d'équilibrer le dispositif 1 de pompage. Selon un mode de réalisation particulier, un filtre à eau 26 est agencé entre les cuves d'eau 15A et 15B et la pompe haute pression 14. D'autres filtres, dont un filtre autonettoyant et un filtre à cinq poches microns, peuvent également être disposés entre la pompe de gavage 141 et la pompe à haute pression 14.

Chacun des hydro-injecteurs 13A, 13B est muni d'une bouche d'aspiration 16A, 16B qui est reliée à l'orifice d'aspiration 6A, 6B de chaque cuve de transit 4A, 4B par l'intermédiaire notamment de conduites 17A, 17B et 18 de rejet sous vide.

Ainsi, le passage de l'eau dans les hydro-éjecteurs 13A et 13B engendre, par effet Venturi, un appel d'air au niveau de la bouche d'aspiration 16A, 16B de chaque hydro-éjecteur 13A, 13B. Cet appel d'air généré dans les conduites 17A, 17B et 18 produit la mise sous vide des cuves de transit 4A et 4B. Pour créer l'effet Venturi, l'eau présente un bon rendement, meilleur par exemple que l'air. De plus, l'eau utilisée permet de piéger par mouillage les gaz. Par ailleurs, l'utilisation de l'effet Venturi avec de l'eau à haute pression (environ 300 bar) permet d'obtenir un vide de 90%.

Dans un mode de réalisation préféré, un des hydro-éjecteurs 13A est utilisé pour générer l'aspiration initiale ou mise sous vide initiale des cuves de transit 4A et B et l'autre hydro-éjecteur 13B est configuré pour compenser les variations ou prises d'air au cours du temps une fois que la mise sous vide est générée.

Par ailleurs, les produits non gazeux peuvent contenir des éléments solides de sorte que leur pompage se fait directement dans l'enceinte de stockage 3 par une mise sous vide et en pompant par l'intermédiaire d'une canalisation 3C située près du fond de l'enceinte de stockage 2.

Dans ce mode de réalisation particulier, l'unité d'aspiration 13 génère une aspiration dans l'enceinte de stockage 3 par l'intermédiaire d'un conduit 3G reliant la bouche d'aspiration 16A, 16B de chaque hydro-éjecteur 13A, 13B à un orifice agencé sur l'enceinte de stockage 3. Cet orifice est ouvert ou fermé par une vanne 3D agencé sur le conduit 3G.

Comme représenté sur les figure 1 et 2, l'unité de transfert 20 engendre la vidange des produits non gazeux (issus de la séparation des produits dans les cuves de transit 4A et 4B) vers l'enceinte de stockage 3. Les produits non gazeux circulent dans une conduite de transfert 20A qui relie les sorties 7A et 7B de transfert à l'enceinte de stockage 3. Une vanne 3A est agencée sur la conduite 20A à proximité d'une entrée de produits dans le fond de l'enceinte de stockage 3.

Dans un mode de réalisation préféré, l'unité de transfert 20 comporte une pompe volumétrique 20 qui pompe les produits non gazeux et les refoule dans l'enceinte de stockage 3. Cette pompe volumétrique 20 est montée sur la conduite de transfert 20A de sorte qu'elle est reliée à la sortie de refoulement 7A, 7B de chacune des cuves de transit 4A, 4B et l'entrée de produits non gazeux de l'enceinte de stockage 3. À titre d'exemple, la pompe volumétrique 20 est une pompe volumétrique type ROOTES pour fluides et pâteux.

Selon un mode de réalisation particulier, le sens de refoulement de la pompe volumétrique 20 peut être inversé. La pompe volumétrique 20 peut alors refouler les produits non gazeux de l'enceinte de stockage 3 vers une autre zone de stockage (non représentée). On entend par « autre zone de stockage » une autre enceinte de stockage, un site spécialisé de traitement et/ou de stockage, etc. Des vannes 22A et 22B peuvent être agencées de part et d'autre de la pompe volumétrique 20 de sorte à aspirer ou refouler les produits non gazeux en fonction du sens de la marche. La pompe volumétrique 20 présente une double fonction de remplissage et de vidange de l'enceinte de stockage 3 et offre également la possibilité d'être utilisée comme une simple pompe de transfert.

En outre, le dispositif de pompage 1 comporte également un réseau 19 de rejet de gaz, dans lequel circulent les gaz générés au cours du pompage des produits. Ce réseau 19 est configuré pour rejeter ces gaz vers une zone de rejet. Pour ce faire, il comporte les conduites 17A et 17B qui relient l'orifice d'aspiration 6A, 6B de chaque cuve de transit 4A, 4B à la bouche d'aspiration 16A, 16B de chaque hydro-éjecteur 13A, 13B de l'unité d'aspiration 13. Ainsi, la mise sous vide des cuves de transit 4A, 4B participe au rejet des gaz issus de la séparation des produits pompés en produits non gazeux et en produits gazeux due aux phénomènes de désorption dans ces cuves 4A et 4B.

Le réseau 19 comporte également la conduite 18A de transfert d'eau qui relie les hydro-éjecteurs 13A et 13B à la cuve d'eau 15A. Ainsi, les vapeurs de gaz entrant dans les hydro-injecteurs 13 par les bouches d'aspiration 13A et 13B sont piégés par mouillage dans l'eau qui est refoulée dans les cuves d'eau 15A et 15B. Ce piégeage de gaz apporte de l'aide environnementale aux rejets de gaz possiblement toxiques et polluants.

Comme représenté sur les figures 1 et 2, le réseau 19 de rejet de gaz comporte également une canalisation 15C qui est montée par une extrémité sur la partie supérieure des cuves d'eau 15A et 15B et dont l'autre extrémité 15E débouche sur la zone de rejet de sorte que les gaz piégés dans l'eau peuvent s'échapper vers la zone de rejet.

Les gaz à rejeter résultent également, de phénomènes de désorption des produits, se trouvant sur la surface de l'enceinte de stockage 3. Selon un mode de réalisation particulier, le réseau 19 comporte également un conduit 3F de rejet qui relie l'enceinte de stockage 3 directement à la cuve d'eau 15A.

Par ailleurs, dans un mode de réalisation particulier dans lequel l'unité d'aspiration 13 génère une aspiration dans l'enceinte de stockage 3, le conduit 3G reliant la bouche d'aspiration 16A, 16B de chaque hydro-éjecteur 13A, 13B à l'orifice près de la vanne 3D contribue au rejet des gaz issus de la désorption dans l'enceinte de stockage 3 et fait partie du réseau de rejet 19.

Comme représenté sur les figures 1 et 2, le dispositif de pompage 1 comporte également un cyclo-filtre 23 qui est agencé entre les hydro-éjecteurs 13A et 13B d'un côté et les cuves de transit 4A et 4B et l'enceinte de stockage 3 de l'autre côté. Le cyclo-filtre 23 est également muni d'une vanne 27 de vidange permettant également la mise hors gel.

Dans ce mode de réalisation, les conduites 17A et 17B et le conduit 3G présentent une partie commune sur laquelle est monté le cyclo-filtre 23 de sorte que les gaz circulant dans ces conduites, sont filtrés par le cyclo-filtre 23 avant d'entrer dans les hydro-éjecteurs 13A et 13B. Le filtrage des gaz dans le cyclo-filtre 23 permet ainsi, notamment, d'éliminer des gaz de petites particules qui pourraient polluer l'unité d'aspiration 13.

En outre, le dispositif de pompage 1 est également pourvu d'une pluralité de vannes 3A, 3B, 3D, 3E, 3I, 4C, 4D, 4I et 4J dont l'ouverture, la fermeture et l'orientation sont commandées par un système de commande 25 de type usuel, non décrit davantage dans la présente description. L'ouverture, la fermeture et l'orientation de cette pluralité de vannes 3A, 3B, 3D, 3E, 3I, 4C, 4D, 4I et 4J peut, en alternance, soit permettre, soit bloquer le pompage des produits de la zone de pompage 2 vers l'une des cuves de transit 4A, 4B mise sous vide par l'unité d'aspiration 13 et le refoulement des produits non gazeux de l'autre cuve de transit 4B, 4A vers l'enceinte de stockage 3 par l'unité de refoulement 20, comme précisé ci-dessous.

Ainsi, on limite au maximum le temps de mise sous vide :
- en utilisant des cuves de transit 4A et 4B de capacité réduite ;
- en remplissant et en vidant simultanément et en alternance ces cuves de transit 4A et 4B ; et
- en utilisant pour vider les cuves de transit 4A et 4B, une unité de transfert 20 qui est distincte de l'unité d'aspiration 13 (ou de mise sous vide).

Selon un mode de réalisation préféré, les vannes 4C, 4D, 4I et 4J sont des vannes à trois voies. La vanne 4J est agencée entre un tuyau de pompage 2A et les conduites 9A et 9B qui relient ensemble la zone de pompage 2 aux entrées de produits 5A et 5B des cuves de transit 4A et 4B. La vanne 4J peut prendre deux orientations permettant de diriger le pompage des produits vers l'une ou l'autre des cuves de transit 4A et 4B. La vanne 4I est agencée sur la conduite 20A entre la pompe de transfert 20 et les orifices de sortie 7A et 7B. La vanne 4I est apte à permettre le transfert des produits non gazeux dans l'enceinte de stockage 3 et provenant soit de la cuve de transit 4A soit de la cuve de transit 4B en fonction de son orientation. Les vannes 4C et 4D sont agencées chacune sur une des conduites 17A, 17B qui relie un orifice d'aspiration 6A, 6B à l'unité d'aspiration 13.

Le système de commande 25 peut commander, simultanément, l'orientation des vannes trois voies 4C, 4D, 4I et 4J.

Dans cette configuration représentée sur la figure 1, la cuve de transit 4B est reliée à l'unité d'aspiration 13 par les conduites 17B et 18 et à la zone de pompage 2 par les conduites 9B et 2A. La cuve de transit 4A est reliée, quant à elle, à l'unité de transfert 20 par la conduite de transfert 20A qui conduit à l'enceinte de stockage 3.

Le système de commande 25 peut, en alternance, commander simultanément les orientations différentes des vannes 4C et 4D et l'orientation de la vanne 4J pour le remplissage de la cuve de transit 4B seulement et l'orientation de la vanne 4I pour la vidange de la cuve de transit 4A. Chacune des vannes 4C, 4D, 4I et 4D comprend deux orientations. La première orientation des vannes 4C et 4D correspond, respectivement, à l'ouverture d'une mise à l'air libre de la cuve de transit 4A et à l'ouverture d'une communication de la cuve de transit 4B avec l'unité d'aspiration 13. La seconde orientation des vannes 4C et 4D correspond, respectivement, à l'ouverture d'une mise à l'air libre de la cuve de transit 4B et à l'ouverture d'une communication de la cuve de transit 4A avec l'unité d'aspiration 13. Par ailleurs, la première, respectivement seconde, orientation de la vanne 4I permet l'ouverture, respectivement fermeture, de la communication entre la cuve de transit 4A et l'enceinte de stockage 3 et la fermeture, respectivement ouverture, de la communication entre la cuve de transit 4B et l'enceinte de stockage 3. La première, respectivement seconde, orientation de la vanne 4J permet l'ouverture, respectivement fermeture, de la communication entre la zone de pompage 2 et la cuve de transit 4B, et la fermeture, respectivement ouverture, de la communication entre la cuve de transit 4A et l'enceinte de stockage 3.

Dans cette configuration représentée sur la figure 2, la cuve de transit 4A est reliée à l'unité d'aspiration 13 par les conduites 17A et 18 et à la zone de pompage 2 par les conduites de transfert 2A et 9A pendant que la cuve de transit 4B est reliée à la pompe de transfert 20 par la conduite de transfert 20A qui la relie à l'enceinte de stockage 3.

Le dispositif de pompage, tel que décrit ci-dessus, met en oeuvre un procédé de pompage de produits de la zone de pompage 2 vers l'enceinte de stockage 3. Ce procédé de pompage qui génère une faible évaporation sous vide de produits, comprend une pluralité d'étapes précisées ci-après.

Selon un mode de réalisation préféré, pour réaliser une mise sous vide, la pompe haute pression 14, alimente en eau à haute pression les hydro-éjecteurs 13A et 13B. Plus particulièrement, la pompe haute pression 14 permet de faire le vide en injectant une eau à haute pression dans un des hydro-éjecteurs 13A, 13B à raison de 70 litres à 1000 bar correspondant à une puissance de 140 kilowatts et environ 2500 mètres cube par heure de volume d'aspiration. Avec une telle puissance, le vide est réalisé rapidement. L'accélération de l'eau dans l'hydro-éjecteur 13A, 13B engendre, par effet Venturi, une dépression au niveau des bouches d'aspiration 16A et 16B. Cette dépression d'air est à l'origine de la mise sous vide des cuves de transit 4A et 4B par l'intermédiaire des conduites 17A, 17B et 18. Elle peut également générer une mise sous vide de l'enceinte de stockage 3 par l'intermédiaire du conduit 3G si les produits à pomper comprennent des éléments solides.

Lorsque le vide est réalisé, la vanne 13C de l'hydro-éjecteur 13A est fermée de sorte à couper le débit d'eau entrant dans cet hydro-éjecteur 13A. La vanne 13D, préalablement fermée, est alors ouverte de sorte que la pompe haute pression 14 alimente en eau haute pression le deuxième hydro-éjecteur 13B. Cet hydro-éjecteur 13B utilise, par exemple, 15 litres d'eau à une pression de 1 000bar seulement pour compenser les prises d'air. Cette réduction de débit permet de passer à une puissance absorbée d'environ 30 kilowatts et 500 mètres cube par heure de débit d'aspiration. Cette phase permet de réaliser d'importantes économies d'énergie.

Dans une première étape de commande de vannes, le système de commande 25 commande :
- l'ouverture de la vanne 3I qui permet la communication entre l'unité d'aspiration 13 et les cuves de transit 4A et 4B,
- la première orientation des vannes 4D et 4J de sorte que la cuve de transit 4B est mise sous vide par l'unité d'aspiration 13 et se remplisse de produits issus de la zone de pompage 2, et
- la première orientation des vannes 4C et 4I de sorte que la cuve de transit 4A est mise à l'air libre et que l'unité de transfert 20 transfère les produits non gazeux vers l'enceinte de stockage 3 qui est à la pression atmosphérique.

Par conséquent, l'aspiration générée par l'unité d'aspiration 13 conduit au pompage des produits de la zone de pompage 2 vers la cuve de transit 4B par l'intermédiaire des conduites 2A et 9B comme illustré par les flèches sur la figure 1.

Simultanément, la première orientation de la vanne 4C qui met la cuve de transit 4A à l'air libre empêche l'aspiration de produit de la zone de pompage 2 dans cette cuve de transit 4A. La première orientation de la vanne 4I met en communication la sortie de transfert 7A de la cuve de transit 4A avec la pompe volumétrique 20 pour refouler les produits non gazeux issus d'une séparation préalable des produits pompés, vers l'enceinte de stockage 3 par l'intermédiaire de la conduite 20A. La cuve de transit 4A se vide alors.

En alternance à cette première étape de commande de vannes, dans une deuxième étape, le système de commande 25 commande la deuxième orientation de la vanne 4C et la seconde orientation de la vanne 4J de sorte que la cuve de transit 4A est mise sous vide par l'unité d'aspiration 13 et se remplisse de produits issus de la zone de pompage 2. Simultanément, le système de commande la seconde orientation de la vanne 4D et la seconde orientation de la vanne 4I de sorte que la cuve de transit 4B est mise à l'air libre et que l'unité de transfert 20 transfère les produits non gazeux préalablement pompé dans cette cuve de transit 4B vers l'enceinte de stockage 3. L'aspiration générée par l'unité d'aspiration 13 conduit au pompage des produits de la zone de pompage 2 vers la cuve de transit 4A par l'intermédiaire des conduites 2A et 9A comme illustré par les flèches sur la figure 2. La seconde orientation de la vanne 4I met en communication la sortie de transfert 7B de la cuve de transit 4B avec la pompe volumétrique 20 pour refouler les produits non gazeux issus d'une séparation préalable des produits pompés, vers l'enceinte de stockage 3 par l'intermédiaire de la conduite 20A. La cuve de transit 4B se vide alors.

Ces deux étapes de commande de vannes sont mises en oeuvre de façon alternative tout au long du pompage.

Ainsi, les deux cuves de transit 4A et 4B travaillent en alternance, ce qui permet de limiter le temps d'exposition au vide des produits pompés de manière à limiter les phénomènes de désorption des gaz dissous dans les produits. Ce temps d'exposition est de maximum 12 secondes.

Une étape de rejet de gaz est mise en oeuvre au cours des étapes décrites précédemment. Au cours de cette étape de rejet de gaz, les gaz générés par la séparation des produits et par des phénomènes de désorption sont rejetés dans une zone de rejet par l'intermédiaire du réseau 19 de rejet.

Dans l'étape de la figure 1, simultanément au remplissage de la cuve de transit 4B par les produits, la première orientation de la vanne 4D permet l'évacuation des gaz issus du pompage de produits. Ces gaz ou produits non gazeux, traversent le cyclo-filtre 23 puis les hydro-éjecteurs 13A et 13B où ils sont piégés par mouillage dans les cuves 15A, 15B d'eau avant d'être évacués par la canalisation 15C verticale vers la zone de rejet.

En outre, dans l'étape de la figure 2, simultanément au remplissage de la cuve de transit 4A par les produits, la seconde orientation de la vanne 4C permet l'évacuation des gaz issus du pompage de produits. Ces gaz traversent le cyclo-filtre 23 puis les hydro-éjecteurs 13A et 13B où ils sont piégés par mouillage dans les cuves 15A, 15B d'eau avant d'être évacués par la canalisation 15C verticale vers la zone de rejet. Le cheminement des produits non gazeux est illustré par la flèche sur la figure 2.

Au cours de l'étape de rejet de gaz, lors du pompage des produits directement par l'enceinte de stockage 3, les gaz produits par désorption dans l'enceinte de stockage 3 circulent dans les conduites 3F et 15D jusqu'à la cuve 15A, 15B d'eau puis sont évacués par la canalisation 15C verticale.

En revanche, lorsque les produits non gazeux contiennent des éléments solides et que l'unité d'aspiration 13 a généré une mise sous vide de l'enceinte de stockage 3 au cours de l'étape de mise sous vide, les éléments solides sont arrêtés par le cyclo-filtre 23A par l'intermédiaire du conduit 3G.

En outre, au cours d'une étape de refoulement (ou de vidange), qui peut être mise en oeuvre ultérieurement aux autres étapes du procédé, les produits non gazeux présents dans l'enceinte de stockage 3 peuvent être refoulés de l'enceinte de stockage 3 vers une autre zone (non représentée) par l'unité de transfert 20.

Dans le cadre de la présente invention, le dispositif de pompage 1, tel que décrit, peut être utilisé pour des opérations ou des travaux variés (à haute pression).

Le dispositif de pompage 1 et l'enceinte de stockage 3 peuvent faire partie d'une unité 29 de pompage et de stockage de produits.

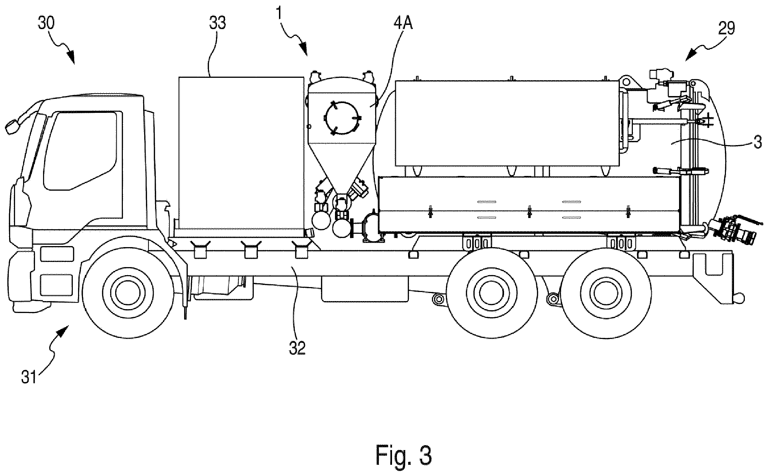

Dans une application préférée, l'unité 29 (comprenant donc le dispositif de pompage 1 et l'enceinte de stockage 3 est montée sur un hydrocureur 30 représenté sur la figure 3. L' hydrocureur 30 comporte un véhicule porteur 31 pourvu d'un châssis 32 destiné à recevoir des équipements. Le châssis 32 comprend notamment, de l'arrière vers l'avant, l'enceinte de stockage 3 les cuves de transit dont uniquement la cuve de transit 4A est visible sur la figure 3, et un caisson 33 qui comprend au moins une partie des éléments de l'unité d'aspiration 13 et de l'unité de refoulement 20. L'hydrocureur 30 peut être un hydrocureur d'assainissement qui est destiné, en particulier, à assurer des opérations de curage et de pompage de réseaux d'eaux usées et d'ouvrages d'assainissement. L'hydrocureur 30 peut également être un hydrocureur industriel qui est destiné à des travaux de nettoyage d'équipements et d'installations industrielles, et notamment à des travaux de nettoyage sur des sites pétroliers et parapétroliers.

## Revendications

1. Dispositif de pompage de produits d'une zone de pompage (2) vers une enceinte de stockage (3), ledit dispositif de pompage (1) comportant :
- deux cuves de transit (4A, 4B) configurées pour recevoir les produits à pomper se séparant en produits non gazeux et en produits gazeux, chacune desdites cuves de transit (4A, 4B) étant munie d'un entrée de produits (5A, 5B), d'une sortie de vidange (7A, 7B) de produits non gazeux et d'un orifice d'aspiration (6A, 6B) ;
- un système de transfert (8) configuré pour générer une aspiration des produits de la zone de pompage (2) vers lesdites cuves de transit (4A, 4B) et pour générer un transfert des produits non gazeux desdites cuves de transit (4A, 4B) vers l'enceinte de stockage (3) ;
- une pluralité de vannes (3A, 3B, 3D, 3E, 3I, 4C, 4D, 4I, 4J) aptes à être commandées et configurées pour, en alternance, soit permettre, soit bloquer une communication d'une desdites cuves de transit (4A, 4B) avec le système de transfert (8) et la zone de pompage (2) et une communication de l'autre desdites cuves de transit (4A, 4B) avec le système de transfert (8) vers l'enceinte de stockage (3) ; et
- un système de commande (25) de ladite pluralité de vannes (3A, 3B, 3D, 3^{E}, 3I, 4C, 4D, 4I, 4J),
ledit système de transfert (8) comportant :
- une unité d'aspiration (13) munie d'au moins deux hydro-éjecteurs (13A, 13B) reliés à l'orifice d'aspiration (5A, 5B) de chacune desdites cuves de transit (4A, 4B) et configurée pour au moins générer l'aspiration et la séparation des produits à pomper en produits gazeux et non gazeux ; et
- une unité de transfert (20) distincte de l'unité d'aspiration (13), qui est munie d'une pompe volumétrique de transfert configurée pour au moins générer le transfert des produits non gazeux vers l'enceinte de stockage (3),
**caractérisé en ce que** :
- l'aspiration des produits de la zone de pompage (2) est engendrée par une mise sous vide des cuves de transit (4A, 4B) en limitant le temps d'exposition au vide ;
- la pompe volumétrique de transfert est reliée à la sortie de vidange (7A, 7B) de chacune desdites cuves de transit (4A, 4B).

2. Dispositif de pompage selon la revendication 1,
**caractérisé en ce que** le diamètre de chacune desdites cuves de transit (4A, 4B) est compris entre 70 centimètres et 80 centimètres.

3. Dispositif de pompage selon l'une des revendications 1 et 2,
**caractérisé en ce que** le rapport entre le volume et la surface supérieure des cuves de transit en contact (4A, 4B) avec les produits est compris 1/30 et 1/25.

4. Dispositif de pompage selon l'une quelconque des revendications précédentes, **caractérisé en ce que** l'unité d'aspiration (13) est munie d'une pompe haute pression (14) alimentant lesdits au moins deux hydro-éjecteurs (13A, 13B) en eau à haute pression, chacun desdits au moins deux hydro-éjecteurs (13A, 13B) refoulant l'eau dans au moins une cuve d'eau (15A, 15B) qui alimente ladite pompe haute pression (14).

5. Dispositif de pompage selon l'une quelconque des revendications précédentes **caractérisé en ce qu'**il comporte un réseau (19) de rejet des gaz produits au cours du pompage vers une zone de rejet, le réseau de rejet comprenant :
- au moins une conduite (17A, 17B) de rejet des gaz produits par lesdites cuves de transit (4A, 4B) et reliant l'orifice d'aspiration (6A, 6B) de chacune desdites cuves de transit (4A, 4B) auxdits au moins deux hydro-éjecteurs (13A, 13B), ladite au moins une conduite (17A, 17B) contribuant également à la mise sous vide par aspiration de chacune desdites cuves de transit (4A, 4B) ;
- au moins une conduite (18A, 15D) de transfert d'eau reliant lesdits au moins deux hydro-éjecteurs à au moins une cuve d'eau (15A, 15B) ; et
- une canalisation (15) sortant de ladite au moins une cuve d'eau (15A, 15B) de manière à disperser les gaz produits par lesdites cuves de transit (4A, 4B) dans la zone de rejet.

6. Dispositif de pompage selon la revendication 5,
**caractérisé en ce que** le réseau (19) de rejet comporte également un premier conduit (3F) de rejet des gaz produits par désorption dans l'enceinte de stockage (3), reliant l'enceinte de stockage (3) à ladite au moins une cuve d'eau (15A, 15B).

7. Dispositif de pompage selon l'une quelconque des revendications précédentes, **caractérisé en ce que** l'unité d'aspiration (13) est configurée pour générer une mise sous vide de l'enceinte de stockage (3), pour aider au pompage direct par une pipe arrière de produits comprenant des éléments solides.

8. Dispositif de pompage selon la revendication précédente,
**caractérisé en ce que** le réseau (19) de rejet comporte un second conduit (3G) de rejet des gaz produits par désorption dans l'enceinte de stockage (3), reliant ladite enceinte de stockage (3) auxdits au moins deux hydro-éjecteurs (13), ledit second conduit (3G) contribuant également à la mise sous vide de l'enceinte de stockage (3).

9. Dispositif de pompage selon l'une quelconque des revendications précédentes, **caractérisé en ce qu'**il comporte un cyclo-filtre (23) configuré pour filtrer les gaz issus de chacune desdites cuves de transit (4A, 4B), ledit cyclo-filtre (23) étant agencé entre lesdits au moins deux hydro-éjecteurs (13A, 13B) et chacune desdites cuves de transit (4A, 4B).

10. Dispositif de pompage selon l'une quelconque des revendications précédentes, **caractérisé en ce que** l'unité de transfert (20) est également configurée pour transférer lesdits produits non gazeux de l'enceinte de stockage (3) vers une autre zone de stockage.

11. Unité de pompage et de stockage de produits issus d'une zone de pompage (2),
**caractérisée en ce qu'**elle comporte un dispositif de pompage (1) de produits tel que celui spécifié sous l'une quelconque des revendications 1 à 10, ainsi qu'une enceinte de stockage (3).

12. Hydrocureur,
**caractérisé en ce qu'**il comporte une unité (29) de pompage et de stockage, telle que celle spécifiée sous la revendication 11.

13. Procédé de pompage de produits d'une zone de pompage (2) vers une enceinte de stockage (3), ledit procédé de pompage comprenant les étapes suivantes, mises en oeuvre alternativement :
- une première étape de commande de vannes consistant à permettre l'aspiration de produits de la zone de pompage (2) vers une première cuve de transit (4A, 4B) préalablement mise sous vide par une unité d'aspiration (13) et la séparation des produits pompés en produits non gazeux et en produits gazeux dans ladite première cuve de transit (4A, 4B) et, simultanément, à permettre le transfert des produits non gazeux par une unité de transfert (20) de la seconde cuve de transit (4A, 4B) vers l'enceinte de stockage (3) ; et
- une seconde étape de commande de vannes consistant à permettre l'aspiration de produits de la zone de pompage (2) vers la seconde cuve de transit (4A, 4B) préalablement mise sous vide par l'unité d'aspiration (13) et la séparation des produits pompés en produits non gazeux et en produits gazeux dans ladite seconde cuve de transit (4A, 4B) et, simultanément, à permettre le transfert des produits non gazeux par l'unité de transfert (20) de la première cuve de transit (4A, 4B) vers l'enceinte de stockage (3),
l'unité d'aspiration (13) étant munie d'au moins deux hydro-éjecteurs (13A, 13B) reliés à un orifice d'aspiration (5A, 5B) de chacune desdites cuves de transit (4A, 4B),
l'aspiration des produits de la zone de pompage (2) étant engendrée par une mise sous vide des cuves de transit (4A, 4B) en limitant le temps d'exposition au vide,
l'unité de transfert (20) étant distincte de l'unité d'aspiration (13) et munie d'une pompe volumétrique de transfert.

14. Procédé de pompage selon la revendication 13,
**caractérisé en ce que** la durée maximale de mise sous vide des produits pompés dans une des cuves de transit (4A, 4B) est inférieure ou égale à 12 secondes.

15. Procédé de pompage selon l'une des revendications 13 et 14,
**caractérisé en ce qu'**il comprend également une étape de rejet des gaz, mise en oeuvre simultanément à la mise en oeuvre des première et seconde étapes de commande de vannes, cette étape de rejet des gaz consistant à rejeter les gaz produits au cours de la séparation des produits dans chacune desdites cuves de transit (4A, 4B) vers une zone de rejet par l'intermédiaire d'un réseau de rejet (19).

## Patentansprüche

1. Vorrichtung zum Pumpen von Produkten aus einer Pumpzone (2) in Richtung eines Lagerungsbehälters (3), wobei die Vorrichtung zum Pumpen (1) Folgendes umfasst:
- zwei Transittanks (4A, 4B), konfiguriert zum Aufnehmen der zu pumpenden Produkten, die sich in nicht gasförmige Produkte und gasförmige Produkte trennen, wobei jeder dieser Transittanks (4A, 4B) mit einem Produkteeinlass (5A, 5B), einem Ablassauslass (7A, 7B) von nicht gasförmigen Produkten und einer Absaugöffnung (6A, 6B) ausgestattet ist;
- ein Transfersystem (8), konfiguriert zum Verursachen einer Absaugung der Produkte aus der Pumpzone (2) in Richtung der Transittanks (4A, 4B) und zum Verursachen eines Transfers der nicht gasförmigen Produkten der Transittanks (4A, 4B) in Richtung des Lagerungsbehälters (3);
- eine Vielzahl von Absperrventilen (3A, 3B, 3D, 3E, 31, 4C, 4D, 41, 4J), die in der Lage sind, gesteuert und konfiguriert zu werden, um eine Kommunikation eines der Transittanks (4A, 4B) mit dem Transfersystem (8) und der Pumpzone (2) und eine Kommunikation des anderen der Transittanks (4A, 4B) mit dem Transfersystem (8) in Richtung des Lagerungsbehälters (3) abwechselnd entweder zu erlauben oder zu blockieren; und
- ein Steuerungssystem (25) der Vielzahl von Absperrventilen (3A, 3B, 3D, 3^{E}, 31, 4C, 4D, 41, 4J),
wobei das Transfersystem (8) umfasst:
- eine Absaugungseinheit (13), ausgestattet mit mindestens zwei Wasserstrahlpumpen (13A, 13B), die mit der Absaugöffnung (5A, 5B) von jedem der Transittanks (4A, 4B) verbunden sind, und konfiguriert, um mindestens die Absaugung und die Trennung der zu pumpenden Produkte in gasförmige und nicht gasförmige Produkte zu verursachen; und
- eine von der Absaugeinheit (13) unterscheidbare Transfereinheit (20), die mit einer volumetrischen Transferpumpe ausgestattet ist, konfiguriert, um mindestens den Transfer der nicht gasförmigen Produkte in Richtung des Lagerungsbehälters (3) zu verursachen,
**dadurch gekennzeichnet, dass**:
- die Absaugung der Produkte aus der Pumpzone (2) durch Evakuieren der Transittanks (4A, 4B) hervorgerufen wird, wobei die Dauer einer Exposition gegenüber dem Vakuum begrenzt wird;
- die volumetrische Transferpumpe mit dem Ablassauslass (7A, 7B) von jedem der Transittanks (4A, 4B) verbunden ist.

2. Vorrichtung zum Pumpen nach Anspruch 1,
**dadurch gekennzeichnet, dass** der Durchmesser von jedem der Transittanks (4A, 4B) zwischen 70 Zentimetern und 80 Zentimetern beträgt.

3. Vorrichtung zum Pumpen nach einem der Ansprüche 1 und 2,
**dadurch gekennzeichnet, dass** das Verhältnis zwischen dem Volumen und der oberen Oberfläche der Transittanks (4A, 4B) in Kontakt mit den Produkten 1/30 und 1/25 beträgt.

4. Vorrichtung zum Pumpen nach einem der vorstehenden Ansprüche, **dadurch gekennzeichnet, dass** die Absaugeinheit (13) mit einer Hochdruckpumpe (14) ausgestattet ist, die die mindestens zwei Wasserstrahlpumpen (13A, 13B) mit Hochdruckwasser versorgt, wobei jede der mindestens zwei Wasserstrahlpumpen (13A, 13B) das Wasser in mindestens einen Wassertank (15A, 15B) fördert, der die Hochdruckpumpe (14) versorgt.

5. Vorrichtung zum Pumpen nach einem der vorstehenden Ansprüche, **dadurch gekennzeichnet, dass** sie ein Ausstoßnetzwerk (19) von Gasen umfasst, die im Laufe des Pumpens in Richtung einer Ausstoßzone produziert werden, wobei das Ausstoßnetzwerk beinhaltet:
- mindestens eine Ausstoßleitung (17A, 17B) von Gasen, die durch die Transittanks (4A, 4B) produziert wurden, und die Ansaugöffnung (6A, 6B) von jedem der Transittanks (4A, 4B) mit den mindestens zwei Wasserstrahlpumpen (13A, 13B) verbindet, wobei die mindestens eine Leitung (17A, 17B) gleichermaßen zum Evakuieren durch Absaugung von jedem der Transittanks (4A, 4B) beiträgt;
- mindestens eine Transferleitung (18A, 15D) von Wasser, die die mindestens zwei Wasserstrahlpumpen mit mindestens einem Wassertank (15A, 15B) verbindet; und
- mindestens eine Kanalisierung (15), die den mindestens einen Wassertank (15A, 15B) auf eine Weise verlässt, um die durch die Transittanks (4A, 4B) produzierten Gase in der Ausstoßzone zu verteilen.

6. Vorrichtung zum Pumpen nach Anspruch 5,
**dadurch gekennzeichnet, dass** das Ausstoßnetzwerk (19) gleichermaßen eine erste Ausstoßleitung (3F) von Gasen umfasst, die durch Desorption in dem Lagerungsbehälter (3) produziert wurden, die den Lagerungsbehälter (3) mit dem mindestens einen Wassertank (15A, 15B) verbindet.

7. Vorrichtung zum Pumpen nach einem der vorstehenden Ansprüche, **dadurch gekennzeichnet, dass** die Ansaugeinheit (13) zum Verursachen einer Evakuierung des Lagerungsbehälters (3) konfiguriert ist, um beim direkten Pumpen von Produkten, die feste Elemente umfassen, durch ein hinteres Rohr zu helfen.

8. Vorrichtung zum Pumpen nach dem vorstehenden Anspruch,
**dadurch gekennzeichnet, dass** das Ausstoßnetzwerk (19) eine zweite Ausstoßleitung (3G) von Gasen umfasst, die durch Desorption in dem Lagerungsbehälter (3) produziert wurden, die den Lagerungsbehälter (3) mit den mindestens zwei Wasserstrahlpumpen (13) verbindet, wobei die zweite Leitung (3G) gleichermaßen zum Evakuieren des Lagerungsbehälters (3) beiträgt.

9. Vorrichtung zum Pumpen nach einem der vorstehenden Ansprüche, **dadurch gekennzeichnet, dass** sie einen Zyklonfilter (23) umfasst, konfiguriert zum Filtern der Gase, die aus jedem der Transittanks (4A, 4B) stammen, wobei der Zyklonfilter (23) zwischen den mindestens zwei Wasserstrahlpumpen (13A, 13B) und jedem der Transittanks (4A, 4B) angeordnet ist.

10. Vorrichtung zum Pumpen nach einem der vorstehenden Ansprüche, **dadurch gekennzeichnet, dass** die Transfereinheit (20) gleichermaßen konfiguriert ist zum Transferieren der nicht gasförmigen Produkte von dem Lagerungsbehälter (3) in Richtung einer anderen Lagerungszone.

11. Pump- und Lagerungseinheit von Produkten, die aus eine Pumpzone (2) stammen,
**dadurch gekennzeichnet, dass** sie eine Vorrichtung zum Pumpen (1) von Produkten wie jene in einem der Ansprüche 1 bis 10 spezifiziert, sowie einen Lagerungsbehälter (3) umfasst.

12. Saugwagen,
**dadurch gekennzeichnet, dass** er eine Pump- und Lagerungseinheit (29) umfasst, wie jene in Anspruch 11 spezifiziert.

13. Verfahren zum Pumpen von Produkten aus einer Pumpzone (2) in Richtung eines Lagerungsbehälters (3), wobei das Verfahren zum Pumpen die folgenden Schritte umfasst, die abwechselnd implementiert werden:
- einen ersten Schritt des Steuerns der Absperrventile, bestehend aus dem Erlauben der Absaugung von Produkten aus der Pumpzone (2) in Richtung eines ersten Transittanks (4A, 4B), das vorher durch eine Ansaugeinheit (13) evakuiert wurde, und der Trennung der gepumpten Produkte in nicht gasförmige Produkte und gasförmige Produkte in dem ersten Transittank (4A, 4B) und gleichzeitig dem Erlauben des Transfers von nicht gasförmigen Produkten durch eine Transfereinheit (20) von dem zweiten Transittank (4A, 4B) in Richtung des Lagerungsbehälters (3); und
- einen zweiten Schritt des Steuerns der Absperrventile, bestehend aus dem Erlauben der Absaugung von Produkten aus der Pumpzone (2) in Richtung des zweiten Transittanks (4A, 4B), das vorher durch die Ansaugeinheit (13) evakuiert wurde, und der Trennung der gepumpten Produkte in nicht gasförmige Produkte und gasförmige Produkte in dem zweiten Transittank (4A, 4B) und gleichzeitig dem Erlauben des Transfers von nicht gasförmigen Produkten durch die Transfereinheit (20) von dem ersten Transittank (4A, 4B) in Richtung des Lagerungsbehälters (3),
wobei die Ansaugeinheit (13) mit mindestens zwei Wasserstrahlpumpen (13A, 13B) ausgestattet ist, die mit einer Ansaugöffnung (5A, 5B) von jedem der Transittanks (4A, 4B) verbunden sind,
wobei die Absaugung der Produkte aus der Pumpzone (2) durch ein Evakuieren der Transittanks (4A, 4B) hervorgerufen wird, wobei die Dauer einer Exposition gegenüber dem Vakuum begrenzt wird,
wobei die Transfereinheit (20) von der Ansaugeinheit (13) unterscheidbar und mit einer volumetrischen Transferpumpe ausgestattet ist.

14. Verfahren zum Pumpen nach Anspruch 13,
**dadurch gekennzeichnet, dass** die maximale Dauer des Evakuierens der gepumpten Produkte in einem der Transittanks (4A, 4B) weniger als oder gleich 12 Sekunden beträgt.

15. Verfahren zum Pumpen nach einem der Ansprüche 13 und 14,
**dadurch gekennzeichnet, dass** es gleichermaßen einen Gasaustoßschritt umfasst, der gleichzeitig mit dem Implementieren des ersten und zweiten Steuerschritts der Absperrventile implementiert wird, wobei dieser Gasausstoßschritt im Ausstoßen der Gase, die im Laufe der Trennung der Produkt in jedem der Transittanks (4A, 4B) produziert wurden, in Richtung einer Ausstoßzone mithilfe eines Austoßnetzwerks (19) besteht.

## Claims

1. A device for pumping products from a pumping area (2) to a storage enclosure (3), said pumping device (1) comprising:
- two transit tanks (4A, 4B) configured to receive the products to be pumped, separating into non-gaseous products and gaseous products, each of said transit tanks (4A, 4B) being provided with a product inlet (5A, 5B), a non-gaseous product drain outlet (7A, 7B) and a suction orifice (6A, 6B);
- a transfer system (8) configured to generate a suction of the products from the pumping area (2) to said transit tanks (4A, 4B) and to generate a transfer of the non-gaseous products from said transit tanks (4A, 4B) to the storage enclosure (3);
- a plurality of valves (3A, 3B, 3D, 3E, 31, 4C, 4D, 4I, 4J) adapted to be controlled and configured to alternately either allow or block a communication of one of said transit tanks (4A, 4B) with the transfer system (8) and the pumping area (2) and a communication of the other of said transit tanks (4A, 4B) with the transfer system (8) to the storage enclosure (3); and
- a control system (25) of said plurality of valves (3A, 3B, 3D, 3E, 3I, 4C, 4D, 4I, 4J),
said transfer system (8) comprising:
- a suction unit (13) provided with at least two hydro-ejectors (13A, 13B) connected to the suction orifice (5A, 5B) of each of said transit tanks (4A, 4B) and configured to at least generate the suction and the separation of the products to be pumped into gaseous and non-gaseous products; and
- a transfer unit (20) distinct from the suction unit (13), which is provided with a volumetric transfer pump configured to at least generate the transfer of the non-gaseous products to the storage enclosure (3),
**characterized in that**:
- the suction of the products from the pumping area (2) is generated by a vacuuming of the transit tanks (4A, 4B) by limiting the vacuum exposure time;
- the volumetric transfer pump is connected to the drain outlet (7A, 7B) of each of said transit tanks (4A, 4B).

2. The pumping device as claimed in claim 1,
**characterized in that** the diameter of each of said transit tanks (4A, 4B) is between 70 centimeters and 80 centimeters.

3. The pumping device according to any one of claims 1 and 2,
**characterized in that** the ratio between the volume and the upper surface of the transit tanks in contact (4A, 4B) with the products is between 1/30 and 1/25.

4. The pumping device according to any one of the preceding claims,
**characterized in that** the suction unit (13) is provided with a high-pressure pump (14) supplying said at least two hydro-ejectors (13A, 13B) with high-pressure water, each of said at least two hydro-ejectors (13A, 13B) discharging the water into at least one water tank (15A, 15B) which supplies said high-pressure pump (14).

5. The pumping device according to any one of the preceding claims,
**characterized in that** it comprises a network (19) for rejecting the gases produced during the pumping to a rejection area, the rejection network comprising:
- at least one conduit (17A, 17B) for rejecting the gases produced by said transit tanks (4A, 4B) and connecting the suction orifice (6A, 6B) of each of said transit tanks (4A, 4B) to said at least two hydro-ejectors (13A, 13B), said at least one conduit (17A, 17B) also contributing to the vacuuming by suction of each of said transit tanks (4A, 4B);
- at least one water transfer conduit (18A, 15D) connecting said at least two hydro-ejectors to at least one water tank (15A, 15B); and
- a pipeline (15) coming out of said at least one water tank (15A, 15B) so as to disperse the gases produced by said transit tanks (4A, 4B) in the rejection area.

6. The pumping device as claimed in claim 5,
**characterized in that** the rejection network (19) also comprises a first duct (3F) for rejecting the gases produced by desorption into the storage enclosure (3), connecting the storage enclosure (3) to said at least one water tank (15A, 15B).

7. The pumping device according to any one of the preceding claims,
**characterized in that** the suction unit (13) is configured to generate a vacuuming of the storage enclosure (3), to assist in the direct pumping through a tail pipe of products comprising solid elements.

8. The pumping device according to the preceding claim,
**characterized in that** the rejection network (19) comprises a second duct (3G) for rejecting the gases produced by desorption into the storage enclosure (3), connecting said storage enclosure (3) to said at least two hydro-ejectors (13), said second duct (3G) also contributing to the vacuuming of the storage enclosure (3).

9. The pumping device according to any one of the preceding claims,
**characterized in that** it comprises a cyclone filter (23) configured to filter the gases coming from each of said transit tanks (4A, 4B), said cyclone filter (23) being arranged between said at least two hydro-ejectors (13A, 13B) and each of said transit tanks (4A, 4B).

10. The pumping device according to any one of the preceding claims,
**characterized in that** the transfer unit (20) is also configured to transfer said non-gaseous products from the storage enclosure (3) to another storage area.

11. A pumping and storage unit for products coming from a pumping area (2),
**characterized in that** it comprises a product pumping device (1) such as that specified in any one claims 1 to 10, as well as a storage enclosure (3).

12. A hydro-cleaner,
**characterized in that** it comprises a pumping and storage unit (29), such as that specified in claim 11.

13. A method for pumping products from a pumping area (2) to a storage enclosure (3), said pumping method comprising the following steps, implemented alternately:
- a first step of controlling valves consisting of allowing the suction of products from the pumping area (2) to a first transit tank (4A, 4B) previously vacuumed by a suction unit (13) and in separating the pumped products into non-gaseous products and gaseous products in said first transit tank (4A, 4B) and, simultaneously, allowing the transfer of the non-gaseous products by a transfer unit (20) from the second transit tank (4A, 4B) to the storage enclosure (3); and
- a second step of controlling valves consisting of allowing the products to be sucked from the pumping area (2) into the second transit tank (4A, 4B) previously vacuumed by the suction unit (13) and of separating the pumped products into non-gaseous products and gaseous products in said second transit tank (4A, 4B) and, at the same time, of allowing the non-gaseous products to be transferred by the transfer unit from the first transit tank (4A, 4B) to the storage enclosure (3),
the suction unit (13) being provided with at least two hydro-ejectors (13A, 13B) connected to a suction orifice (5A, 5B) of each of said transit tanks (4A, 4B),
the suction of the products from the pumping area (2) being generated by a vacuuming of the transit tanks (4A, 4B) by limiting the vacuum exposure time;
the transfer unit (20) being distinct from the suction unit (13) and being provided with a volumetric transfer pump.

14. The pumping method of claim 13,
**characterized in that** the maximum vacuum duration of the products pumped into one of the transit tanks (4A, 4B) is less than or equal to 12 seconds.

15. The pumping method according to any one of claims 13 and 14,
**characterized in that** it also comprises a gas rejection step, implemented simultaneously with the implementation of the first and second valve control steps, this gas rejection step consisting of rejecting the gases produced during the separation of the products in each of said transit tanks (4A, 4B) to a rejection area by means of a rejection network (19).
